(19)

**Europäisches Patentamt**

**European Patent Office**

**Office européen des brevets**

(11) **EP 1 223 411 A1**

(12) **EUROPEAN PATENT APPLICATION**

(43) Date of publication:
**17.07.2002 Bulletin 2002/29**

(51) Int Cl.⁷: **G01F 1/688**, G01K 7/02,
G01N 25/32, G01P 5/12,
G01M 3/00, G01N 13/00

(21) Application number: **01100730.9**

(22) Date of filing: **12.01.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(71) Applicant: **Lidact GmbH**<br>**76646 Bruchsal (DE)**<br><br>(72) Inventors:<br>• **Divin, Nikolai Petrovich**<br>**St. Petersburg (RU)** | • **Sapozhnikov, Sergei Zaharovich**<br>**St. Petersburg 198096 (RU)**<br>• **Mitiakov, Vladimir Yurievich**<br>**St. Petersburg 194017 (RU)**<br>• **Mitiakov, Andrei Vladimirovich**<br>**St. Petersburg 194356 (RU)**<br><br>(74) Representative: **Otte, Peter, Dipl.-Ing.**<br>**Otte & Jakelski**<br>**Patentanwälte,**<br>**Mollenbachstrasse 37**<br>**71229 Leonberg (DE)** |

(54) **Universal sensor for measuring shear stress, mass flow or velocity of a fluid or gas, for determining a number of drops, or detecting drip or leakage**

(57)    Disclosed is a universal sensor, based on a heat flux sensor, for measuring shear stress, mass flow and velocity, for determining a number of drops or for detecting drip or leakage. With this sensor, when installed on a wall or in a pipe, said physical quantities can be determined with high speed in about less than 50 mikroseconds, with high accuracy and without need to preamplify the measured signal. Moreover the sensor's signal is sufficient for direct use with a voltmeter or a computer's analog-digital converter. After calibration of the sensor, the measured signal can be correlated with the above mentioned physical quantities.

Fig.13.

## Description

BACKGROUND OF THE INVENTION

The present invention generally relates to the field of measurement sensors and more specifically to a universal sensor for measuring shear stress particularly within a wall, mass flow and/or velocity of a fluid or gas, fluid or gas consumption, for determining a number of drops, or for detecting drip or leakage. In addition, the invention concerns an according shear stress sensor and mass flow meter.

In many technical applications the measurement of shear stress and mass flow is of increasing interest.

The wall shear stress is usually measured by one of the following methodologies:

- Direct measurement using a floating plate;

- measurement using a thermo-anemometer;

- measurement of the heat transfer from a heated wall.

The first method provides absolute values but requires destruction of the wall and insertion of the above mentioned floating plate. For a number of applications this way is not practicable.

The second method needs a dedicated thermo-anemometer measuring system.

The third method is based on Reynold's analogy between heat transfer and fluid dynamics. This method needs a high speed and high sensitivity heat flux sensor that allows to measure shear stress.

In process control of chemical reactions, for example, an exact mass flow quantity is needed in order to establish a stoichiometric relationship for the reactants.

Classical flow meters determine the quantity of volume flow $V$, where the density $\rho$ of the fluid has to be known or to be measured to obtain mass flow M.

$$\rho\,V = M$$

Especially in the case of gases, density varies strongly with gas temperature and pressure. In order to obtain a mass flow, the measurement of volume flow has to be supplemented by an additional measurement and computational analysis of these parameters. A *direct* measurement of mass flow therefore decreases the number of sensors and the expenditure of installation with obvious consequences regarding costs, measurement accuracy and reliability.

Three different approaches for measuring mass flow are known to which the following physical principles apply:

- Moment of inertia of the fluid;

- modulation of the flow velocity;

- heat transfer from a heated body to the fluid.

Coriolis mass-flow meters are representatives of the first type of instruments. They find applications particularly in the measurement of liquids and slurries. In the case of gases they can only be used at elevated pressure.

The second kind of mass-flow meter is designed to measure gases at flows less than 100 kg/h. The method is based on the modulation of the flow velocity in a pipe by means of a mechanical oscillator which is damped by the mass flow.

In addition, there are two different kinds of thermal mass flow meters:

- Calorimetric flow meters;

- boundary layer thermal flow meters.

The calorimetric mass-flow meter is based on an existing linear dependence between the mass $M$ of a fluid or gas and the amount of energy which is needed to raise its temperature by $\Delta T$. The proportional factor in this relationship is the inverse of the specific heat of the medium at constant pressure. The pure calorimetric approach to mass flow measurement makes use of this principle by measuring the ratio of the power $Q$ transferred from a heater element to the fluid and the resulting temperature change of the fluid obtain mass flow.

Secondly, thermal mass flow meters of the so-called boundary-layer type evaluate the flow-dependent power dissipation of a heater element rather than the temperature change of the fluid. The heat transfer to the moving fluid, also called forced convection, is described by the Navier-Stocks equations and depends on the mass flow.

At the same time, it is possible to measure the flow speed and number of drops with the same type of flow meter. But in this case too a high speed and high sensitivity heat flux sensor is needed.

Aside from the very integral method of determining a heat balance, there exist basically two different methods:

1. Measurement of the temperature gradient; and

2. measurement of the temperature at one point, and determination of the heat flux by solving the so-called inverse heat conduction problem.

If, for example, the heat flux which is transmitted from the wall of a tube to a medium flowing through the interior of the tube is to be measured by measurement of the temperature gradient, two separate thermoelements are usually installed in the wall of the tube at different distances from its interior surface. The heat flux is calculated from the difference between the two temperatures, the distance between the points of measurement and the heat conductivity of the tube wall. In many cases, however, this method fails because the dimensions are too small and the attainable accuracy is insufficient.

This method can be used with sufficient accuracy only with large heat fluxes and relatively thick-walled tubes.

The method based on measurement of the temperature at one point and determination of the heat flux by solving the inverse heat conduction problem, in general, can be used only for one-dimensional problems.

If, for example, the transient heat flux at the surface of a rod is to be measured, a thermoelement is usually installed in an outer layer of the rod and is used to measure the temperature directly below the surface of the rod as a function of time. The resulting temperature profile in the rod is calculated, taking into consideration the rod structure, including possible contact resistance between various layers.

The heat flux is then varied in steps over a period of time to permit determination of that heat flux for which the temperature calculated for the site of the thermoelement coincides with the measured temperature. The solution of this inverse heat conduction problem often produces numerical instabilities which can be avoided only at considerable expense and which adversely influence the accuracy of the measurement.

But there do not exist according sensor techniques for measuring shear stress in a wall or mass flow in a tube.

SUMMARY OF THE INVENTION

It is therefore an object of the present invention to provide a sensor for measuring shear stress, mass flow and/or speed, for determining a number of drops and for detecting drip or leakage having a size as small as possible, which thus can easily be installed in a wall, minimally interferes with a measured flow, and reveals an electrical voltage which is proportional to the shear stress, mass flow or speed, or number of drops.

A further object of the invention is to provide a shear stress sensor, a mass flow meter and speed meter, which can be calibrated directly.

These and other objects are achieved, according to the invention, by the features of the independent claims. Advantageous embodiments are subject matter of the subclaims.

In a preferred embodiment of the invention, the body of the proposed sensor is a high speed and high sensitivity heat flux sensor, which preferably has a plane shape, and can be composed of one or more thermoelements interconnected thus revealing a battery of thermoelements. The required leads to the sensor can be connected to the two outer thermoelements.

A particular advantage of the present invention is the fact that the heat flux sensor can be calibrated directly and absolutely with known heat flux from an electrical heater. For that purpose, the invention further proposes a calibrating device which includes a sensor to be calibrated, a main heater, a sensor - «zero-indicator» and an extra «save» heater. In the calibrating device according to the invention, the whole heat flux from the main heater passes through the calibrated sensor when the «zero» sensor indicates 'no heat flux'.

In addition, the universal sensor based on a heat flux sensor according to the invention can be calibrated very easily and accurately. It should be noted that said sensor can also advantageously be used for shear stress, mass flow and/or speed, or leakage measurements in a combustion chamber of an automotive engine or shear stress measurement in aerospace or space technology, for instance in an aircraft or a spacecraft.

BRIEF DESCRIPTION OF THE DRAWINGS

Other characteristics and advantages of the invention will be apparent from the following detailed description, given solely by way of example and with reference to the accompanying drawings.

In the drawings

FIG. 1     is a perspective view of an element of volume comprising an anisotropic property;

FIG. 2     is a typical temperature distribution in the anisotropic material shown in FIG. 1 when the anisotropy angle is between 0 and 90 degree and the thermal conductivity of the material in one direction $\lambda_{11}$ is not equal to the thermal conductivity in an other direction $\lambda_{33}$;

FIG. 3     is a perspective view as in FIG. 1 showing a slaty structured, artificially made anisotropic material;

FIG. 4     is an anisotropic single crystal of bismuth with main crystallographic plane turned by angle $\theta$ from the plane 1-2-3-4;

FIG. 5     is a schematic diagram illustrating how the heat flux vector turns in the anisotropic material;

FIG. 6     is a perspective view of a sensor showing an arrangement of anisotropic thermoelements on a base with insulation, connections and leads;

FIG. 7     is a photographic picture of the sensor shown in FIG. 6;

FIG. 8    is a schematic cut view of an apparatus for calibrating a sensor;

FIG. 9    is a wiring diagram illustrating electrical connections of the calibrating apparatus;

FIG. 10    depicts typical results of sensor calibration of the single crystal of bismuth shown in FIG. 4 and FIG. 5;

FIG. 11    is a response time signal of the sensor induced by using a laser signal;

FIG. 12    is a schematic view of a measuring arrangement for temperature calibration of the sensor;

FIG. 13    is a schematic view of a sensor for measuring shear stress, mass flow, speed, detect leakage and calculate drops based on a heat flux sensor including a wiring scheme;

FIG. 14    depicts typical results of sensor calibration for measuring shear stress due to the FIG. 13;

## DETAILED DESCRIPTION OF PREFERRED EMBODIMENTS

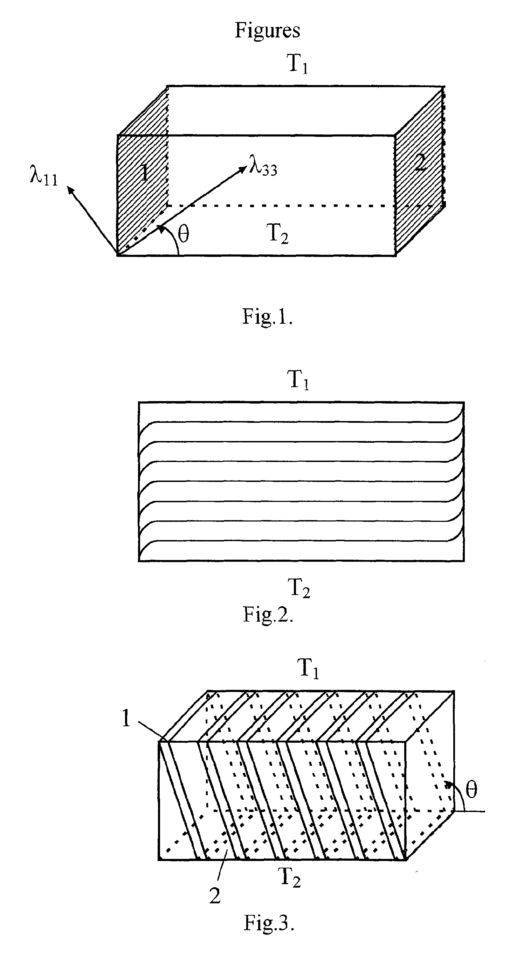

FIG. 1 shows an element of volume of an anisotropic material, in which the thermal conductivity is a tensor of second type. If the angle between the heat flux direction (or temperature gradient) and the anisotropy direction is neither 0 nor 90 degree and if there is a temperature difference $T_2 - T_1$ between the upper and the bottom planes of the element of volume, then this material generates an electromotive force, which can be measured between planes 1 and 2.

FIG. 2 shows the temperature distribution in the profile of the anisotropy material, if there is the angle between the heat flux direction (or temperature gradient) and the anisotropy direction neither 0 nor 90 degrees and if the temperature difference $T_2-T_1$ between the upper and the bottom planes

FIG. 3 shows the schematic view of the artificial anisotropy material, made from different materials 1 and 2 such that there is the angle θ between the heat flux direction and plane of the said material 1 or 2 can not be neither 0 nor 90 degrees.

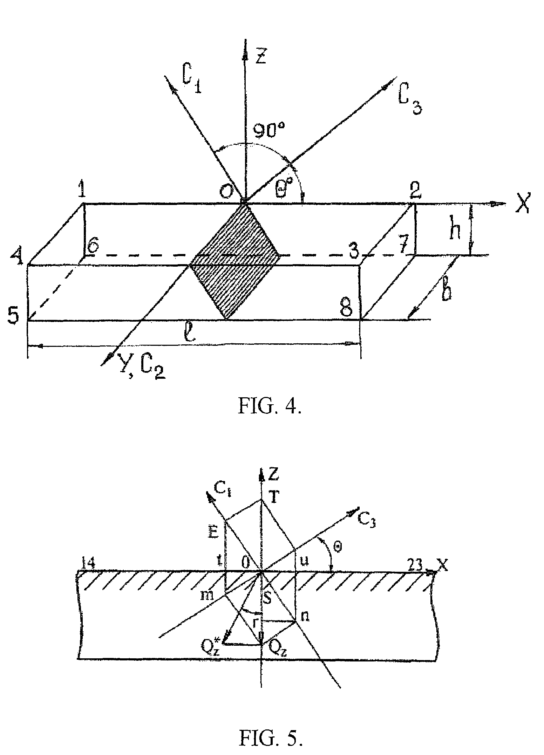

FIG. 4 shows the anisotropy single crystal of bismuth, sliced as rectangular parallelepiped with a special orientation of the main crystallographic plane between the angles θ≠0° and θ≠90°.

According to the theory of anisotropy, when a heat flux is applied to a substance's surface (FIG. 5), a temperature gradient is created and the electromotive force is generated in cross direction to said heat flux and proportional to said heat flux. The angle θ is chosen from condition of maximum sensitivity $S_0$; for bismuth θ≈0.93 rad (FIGURES 4 and 5).

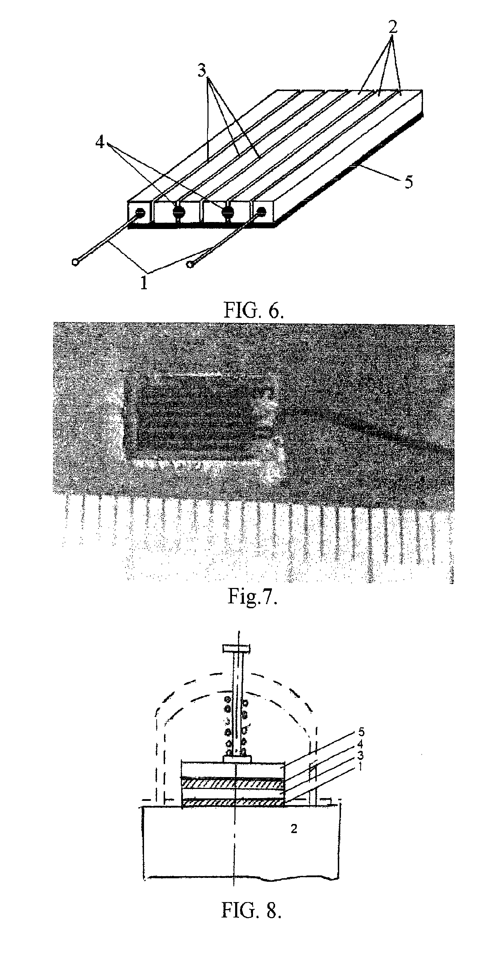

The flat sensors design is shown in FIG. 6 and FIG. 7. The spatial arrangement of the crystallographic planes in the neighbouring thermoelements 2 provide the summation electromotive force from the each thermoelement. The elements are installed on the base 5. The insulation film 3 insulate the nearest thermoelements from each other. All elements are connected with special high-temperature glue. The thermoelements are soldered together by bismuth 4 (99.99% pure). Wires 1 are here for the signal output. The developed technology allows to make the sensor of a different configuration - flat, cylindrical etc.

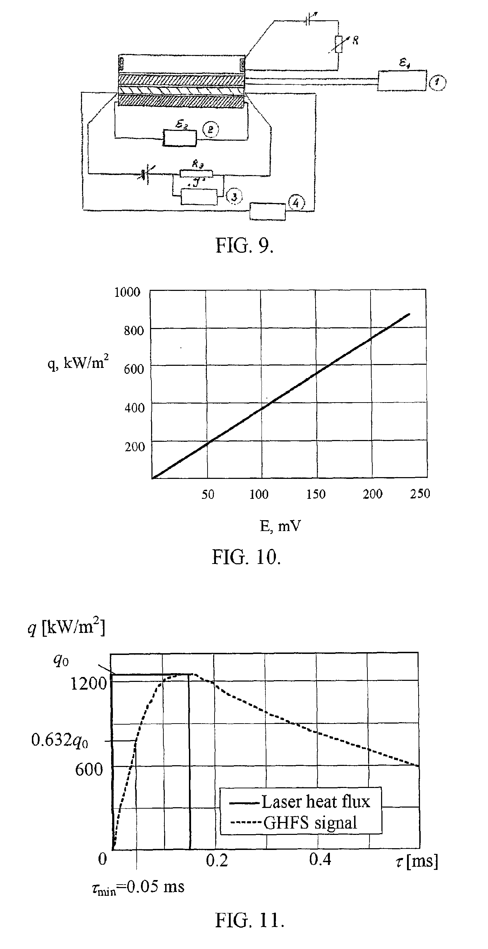

The sensor's sensitivity is determined by the absolute methods of calibration (FIG. 8). According to FIG .8, the sensor 1 is placed on the bulky base 2. There are the heater 3 on opposite side of the sensor 1, the same type sensor 4, named «zero-indicator» and the extra («safe») heater 5. The heater 3 electrical power is controlled by the amperemeter and the voltmeter (Fig. 9). The sensor's 1 electromotive force is registered by voltmeter (Fig. 9). The Joule heat flux from the heater 3 in steady state thermal condition completely passes through the sensor 1. The sensor 4 operates the extra («safe») heater 5, that excludes heat transfer from the heater 3 to the outside. The calibration results are shown on FIG. 10. The sensor's electromotive force $\Delta E$ is linearly proportional to the heat flux.

FIG. 11 shows transient sensor's signal at laser fluencies. The signal of the sensor increases with laser fluencies and rises quickly to the maximum heat flux $q_0$=1250 kW/m. The maximum heat flux is measured by infrared detector. The response time of the sensor from experiment: $\tau_{min} = \tau(0.632q_0)$= 0.05 $_{ms}$.

The sensors can also measure other energy fluxes, particularly infrared radiation.

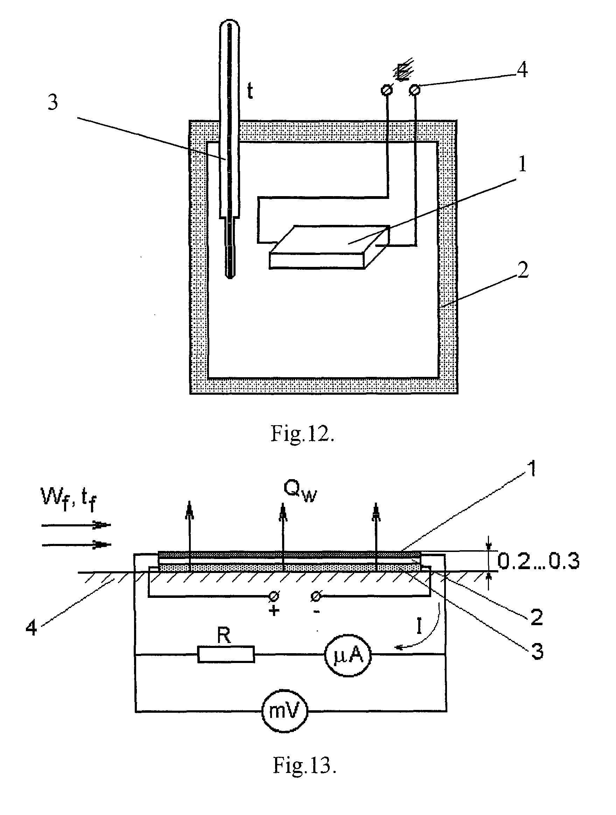

The sensors can also directly measure the temperature because of it's resistance depends of the temperature (FIG. 12). It is possible to find the calibration curve for electrical resistance depends from the temperature, using the sensor 1, thermostat 2, thermometer 3 and wires 4. (FIG. 12)

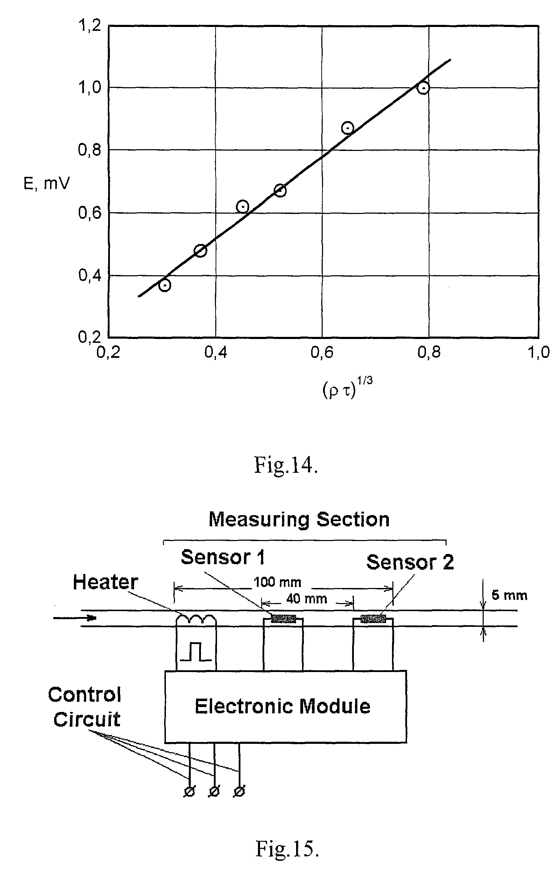

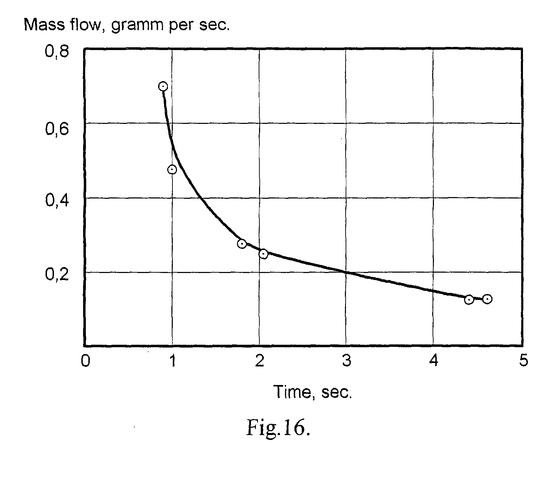

The sensors, in particular, can also measure the wall shear stress (FIG. 13), if there is the heater 3 between the wall 4 and the heat flux sensor 1 and the insulation film 2, and the sensor's signal E depends from the shear stress $(\rho\tau)^{1/3}$ (FIG. 14) (here ρ - gas or fluid density, τ - shear stress).

Using the gradient heat flux sensor, in particular, it is also possible to measure the mass flow (or fluid consumption). When the fluid or gas flow near the sensor, the signal E depends from the mass flow, and, in other case, from the speed. It is possible to calibrate the flow meter with known consumption with different fluids and gases.

## Claims

1. A sensor for measuring shear stress, mass flow and/or speed, for detecting drip or leaking, or for determining a number of drops, **characterized by** a heat flux sensor, installed on a surface where said quantities shall be measured.

2. Sensor according to claim 1, comprising means for measuring heat flux and for calibrating the sensor so that, from the sensor's signal, the shear stress, the mass flow and/or speed, or the number of drops can be calculated.

3. Sensor according to any of the preceding claims, where said heat flux sensor is made from an anisotropic material.

4. Sensor according claim 3 where said material is a single crystal, preferably a bismuth single crystal, or an artificially made anisotropic material, preferably copper-constantan.

5. Sensor according to claim 3 or 4, where said single crystal or other anisotropic material is made as rectangular parallelepiped.

6. Sensor according to any of claims 3 to 5, where said anisotropic material has an angle between a measured heat flux direction and an anisotropy direction of the anisotropic material, preferably an angle between 0 and 90 degrees, but neither 0 nor 90 degrees.

7. Sensor according to any of the preceding claims, where at least two parallelepipeds are installed in series in order to sum up there respective electromotive forces thus providing a battery.

8. Sensor according to claim 7, where said battery is installed on an insulation film by means of glue.

9. Sensor according to claim 7 or 8, wherein the at least two parallelepipeds are electrically insulated among each other by means of the insulation film.

10. Sensor according to claim 7, wherein a first and a last parallelepiped of the series of at least two parallelepipeds have electrical wires for signal output.

11. Sensor according to any of claims 7 to 10, wherein the battery is covered by an insulation film.

12. A shear stress sensor for measuring shear stress particularly within a wall (4), comprising a heating layer (3) deposited onto the wall (4), an insulating layer (2) deposited onto the heating layer (3), and a sensitive layer (1) of a material having at least one anisotropic property deposited onto the insulating layer (2).

13. Shear stress sensor according to claim 1, where the sensitive layer (1) allows to measure an electromotive force E which depends from the shear stress $\tau$ and the gas or fluid density $\rho$ by $E = (\rho\tau)^{1/3}$.

14. A mass flow meter for measuring a mass flow or fluid consumption, comprising a heater, at least two heat flux sensors each of them comprised of a material having at least one anisotropic property, which are arranged at different points of a pipe with a prespecified distance.

15. Shear stress sensor or mass flow meter according to any of the preceding claims, where said anisotropic material is a single crystal, preferably a bismuth single crystal, or an artificially made anisotropic material, preferably copper-constantan.

Figures

$T_1$

Fig.1.

$T_1$

$T_2$

Fig.2.

$T_1$

Fig.3.

FIG. 4.

FIG. 5.

FIG. 6.

Fig.7.

FIG. 8.

FIG. 9.

q, kW/m²

E, mV

FIG. 10.

$q$ [kW/m²]

$q_0$

1200

$0.632q_0$

600

Laser heat flux
GHFS signal

0    0.2    0.4    $\tau$ [ms]

$\tau_{min}$=0.05 ms

FIG. 11.

Fig.12.

Fig.13.

Fig.14.

Fig.15.

Mass flow, gramm per sec.

Time, sec.

Fig.16.

**European Patent Office**

## EUROPEAN SEARCH REPORT

Application Number

EP 01 10 0730

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int.Cl.7) |
| X | GB 2 083 232 A (CHEVRON RES) 17 March 1982 (1982-03-17) * page 2, line 60 - page 4, line 10; figures 2-4 * | 1,2,7 | G01F1/688 G01K7/02 G01N25/32 G01P5/12 G01M3/00 G01N13/00 |
| X | US 3 336 804 A (POPPENDIEK ET AL) 22 August 1967 (1967-08-22) * column 1, lines 13-21; column 2, lines 7-11; column 5, lines 17-35 * | 1,2 | |
| X | US 3 785 875 A (SAMOILOVICH A ET AL) 15 January 1974 (1974-01-15) | 1,3,5,6 | |
| Y | * column 2, lines 6-12; column 3, lines 46-68; figure 1 * | 4 | |
| X | EP 0 313 120 A (BRONKHORST HIGH TECH BV) 26 April 1989 (1989-04-26) | 1,7,10, 11 | |
| Y | * column 4, line 39 - column 4, line 57; figures 4,5 * | 8,9 | |
| X | US 4 986 122 A (GUST GISELHER R) 22 January 1991 (1991-01-22) | 1,2 | **TECHNICAL FIELDS SEARCHED** (Int.Cl.7) G01F |
| Y | * column 3, line 44 - column 8, line 65; figure 1 * | 8,9,12, 13,15 | G01K G01N G01P |
| X | WO 98 50763 A (NASSIOPOULOU ANDROULA G ;NCSR DEMOKRITOS (GR); KALTSAS GRIGORIS (G) 12 November 1998 (1998-11-12) * claim 1; figure 1 * | 1,7,14 | G01M |
| X | US 6 035 711 A (VERHOEVEN HUIBERT JAN ET AL) 14 March 2000 (2000-03-14) * COLUMN 1, lines 11-32; column 3, lines 38-48; figures 1-3 * | 1 | |
| | -/-- | | |

The present search report has been drawn up for all claims

| Place of search | Date of completion of the search | Examiner |
|---|---|---|
| THE HAGUE | 22 August 2001 | Rose, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

# EUROPEAN SEARCH REPORT

Application Number

EP 01 10 0730

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | US 3 530 008 A (SAMOILOVICH ANATOLY GRIGORIEVI ET AL) 22 September 1970 (1970-09-22) * column 2, line 7 - column 3, line 45; figure 1 * | 4,15 | |
| Y | DE 195 20 777 C (INST PHYSIKALISCHE HOCHTECH EV) 29 August 1996 (1996-08-29) * column 2, line 31-61; column 3, line 54-58; figure 1 | 12,13 | |
| | | | TECHNICAL FIELDS SEARCHED (Int.Cl.7) |

The present search report has been drawn up for all claims

| Place of search | Date of completion of the search | Examiner |
|---|---|---|
| THE HAGUE | 22 August 2001 | Rose, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 01 10 0730

This annex lists the patent family members relating to the patent documents cited in the above-mentioned European search report.
The members are as contained in the European Patent Office EDP file on
The European Patent Office is in no way liable for these particulars which are merely given for the purpose of information.

22-08-2001

| Patent document cited in search report | | Publication date | Patent family member(s) | | Publication date |
|---|---|---|---|---|---|
| GB 2083232 | A | 17-03-1982 | US | 4433329 A | 21-02-1984 |
| | | | US | 4434418 A | 28-02-1984 |
| | | | CA | 1173266 A | 28-08-1984 |
| | | | DE | 3135707 A | 08-04-1982 |
| | | | FR | 2489928 A | 12-03-1982 |
| | | | JP | 1502793 C | 28-06-1989 |
| | | | JP | 57076415 A | 13-05-1982 |
| | | | JP | 63055026 B | 01-11-1988 |
| | | | US | 4494112 A | 15-01-1985 |
| | | | US | 4495488 A | 22-01-1985 |
| US 3336804 | A | 22-08-1967 | BE | 651994 A | 19-02-1965 |
| | | | DE | 1473158 A | 24-10-1968 |
| | | | FR | 1409535 A | 03-12-1965 |
| | | | GB | 1072514 A | 21-06-1967 |
| US 3785875 | A | 15-01-1974 | DE | 2000088 A | 08-07-1971 |
| | | | FR | 2076750 A | 15-10-1971 |
| EP 0313120 | A | 26-04-1989 | NL | 8702229 A | 17-04-1989 |
| | | | AT | 69647 T | 15-12-1991 |
| | | | DE | 3866331 A | 02-01-1992 |
| | | | ES | 2028996 T | 16-07-1992 |
| | | | JP | 1147322 A | 09-06-1989 |
| | | | JP | 2561230 B | 04-12-1996 |
| | | | US | 4890489 A | 02-01-1990 |
| US 4986122 | A | 22-01-1991 | DE | 59004322 D | 03-03-1994 |
| | | | DK | 427018 T | 28-02-1994 |
| | | | EP | 0427018 A | 15-05-1991 |
| WO 9850763 | A | 12-11-1998 | GR | 1003010 B | 20-11-1998 |
| US 6035711 | A | 14-03-2000 | NL | 1000454 C | 03-12-1996 |
| | | | AU | 5846296 A | 18-12-1996 |
| | | | EP | 0888556 A | 07-01-1999 |
| | | | JP | 11505929 T | 25-05-1999 |
| | | | WO | 9638731 A | 05-12-1996 |
| US 3530008 | A | 22-09-1970 | DE | 1539281 B | 12-11-1970 |
| DE 19520777 | C | 29-08-1996 | NONE | | |

EPO FORM P0459

For more details about this annex : see Official Journal of the European Patent Office, No. 12/82